# EUROPÄISCHE PATENTSCHRIFT

(11) **EP 3 208 457 B1**
(45) Veröffentlichungstag und Bekanntmachung des Hinweises auf die Patenterteilung: **06.02.2019**
(21) Anmeldenummer: 16205343.3
(22) Anmeldetag: 20.12.2016
(51) Int. Cl.: F03B 1/02, F03B 3/12

(54) **PELTONRAD**
PELTON WHEEL
ROUE PELTON

(30) Priorität: 18.02.2016 AT 501102016
(43) Veröffentlichungstag der Anmeldung: 23.08.2017
(73) Patentinhaber: Andritz Hydro GmbH, 1120 Wien (AT)
(72) Erfinder: LÖTSCHER, Benno, 6034 Inwil (CH); ISLER, Pascal, 6215 Beromünster (CH); LAIS, Stefan, 8906 Bonstetten (CH)
(74) Vertreter: Schweinzer, Friedrich

(56) Entgegenhaltungen:
- AT-B- 33 591
- AT-B- 96 298
- FR-A- 480 562
- JP-A- 2012 127 333
- US-A- 617 555
- US-A- 1 361 467

## Beschreibung

Die Erfindung betrifft ein Peltonrad mit einer Radscheibe und mit separat gefertigten Bechern, die gegossen oder aus dem Vollen gefertigt und lösbar an der Radscheibe befestigt sind, wobei die Befestigung mittels zumindest einer Schraube oder mindestens einem Bolzen erfolgt, die bzw. der senkrecht zur Drehachse der Radscheibe angeordnet und an der Radscheibe befestigt ist.

Zur Herstellung von Peltonrädern gibt es mehrere unterschiedliche Verfahren. Eine aufwändige Methode ist das Herausarbeiten der Peltonbecher aus einem vollen Rohling, wodurch ca. 60 - 70% Material verloren gehen. Bei anderen Verfahren wie z.B. HIWELD oder MICROGUSS (z.B. EP 960181) werden Becher an entsprechend vorbereitete Radscheiben angeschweißt. Weiters ist bereits seit langem u.a. aus der GB 174,768 oder CH 111442 bekannt, einzelne Becher mittels axialer Schrauben an entsprechenden geformten Teilen einer Radscheibe zu befestigen. Um stabil zu sein müssen hier die Becher aber mit entsprechenden Fortsätzen versehen werden, durch die die Schrauben geführt werden können und auch die Radscheibe muss entsprechende Fortsätze aufweisen. Auch ist es seit langer Zeit bekannt Schrauben oder Bolzen in radialer Richtung zu verwenden, wie z.B. in der AT96298B, US1361467A, JP2012127333A, FR480562A, US617555A oder AT33591B. Bei den hohen Strahldrücken und daraus resultierenden dynamischen Kräften treten oft Schäden bzw. Brüche auf. Die bisherigen Herstellungsverfahren der Becher sind sehr aufwändig und kostenintensiv da sie u.a. spezielle Konstruktionen von Anschweiss- oder Anschraubeinrichtungen benötigen. Bei integralen Peltonrädern, die entweder aus einem Stück herausgearbeitet werden oder bei denen die Becher durch verschiedene Methoden angeschweißt werden, werden die Erosionsschäden meist durch Schweißen und Verschleifen repariert. Dies ist besonders in der hochbelasteten Zone am Fuß der Becher ein großes Risiko, da von hier ausgehend dann Risse und in deren Folge, Brüche auftreten können.

Ziel der Erfindung ist es daher eine einfache und kostengünstige Herstellung für ein Peltonlaufrad zu schaffen, die auch eine wirtschaftliche und sichere Instandhaltung ermöglicht.

Die Erfindung ist daher dadurch gekennzeichnet, dass die mindestens eine Schraube oder der mindestens eine Bolzen als Dehnschraube oder Dehnbolzen ausgeführt ist, wobei die Dehnschraube oder der Dehnbolzen kontrolliert vorgespannt ist und jeder Becher mindestens eine Dehnschraube oder Dehnbolzenaufweist, wobei jeder Becher über mindestens eine radial zur Drehachse der Radscheibe ausgerichtete Scherbüchse mit der Radscheibe formschlüssig verbunden ist. Dadurch können sowohl die Radscheibe wie auch die Becher sehr einfach und kostengünstig hergestellt werden. Durch die Scherbolzen als Formschlusselemente kann auch die Schraubenverbindung von den tangential wirkenden dynamischen Kräften entlastet werden.

Eine günstige Weiterbildung der Erfindung ist dadurch gekennzeichnet, dass die Dehnschraube bzw. der Dehnbolzen in Verbindung mit einer Mutter vorgespannt ist. Dadurch können die durch die Rotation auftretenden Kräfte ohne Zusatzmaßnahmen besonders gut beherrscht werden. Die Dehnschraube oder der Dehnbolzenkönnen dabei soweit vorgespannt werden, dass die lebensdauerschädigenden dynamischen Betriebskräfte durch den Strahleingriff auf die Dehnschraube oder den Dehnbolzen entfallen.

Eine vorteilhafte Ausgestaltung der Erfindung ist dadurch gekennzeichnet, dass jeder Becher über weitere radial zur Drehachse ausgerichtete Scherbolzen mit der Radscheibe formschlüssig verbunden ist. Damit können besonders gut die tangentialen Kräfte aus den Wasserstrahlen aufgenommen werden. Gemeinsam mit den vorgespannten Schrauben kann so die dynamische Belastung der Schrauben auf einem sehr niedrigen Niveau gehalten werden und die Schrauben aus kostengünstigem Material gefertigt werden.

Eine günstige Ausgestaltung der Erfindung ist dadurch gekennzeichnet, dass die Dehnschraube oder Dehnbolzen die radialen Fliehkräfte und die Scherbolzen die tangentialen Strahlkräfte in die Radscheibe einleiten. So können die tangentialen und radialen Betriebskräfte getrennt eingeleitet werden und die einzelnen Teile speziell auf diese Belastung ausgelegt werden.

Eine vorteilhafte Weiterbildung der Erfindung ist dadurch gekennzeichnet, dass die Dehnschraube an ihrem freien Ende eine Abdeckung aufweist. Damit kann sie vor abrasivem Wasser geschützt werden, was die Lebensdauer verlängert.

Eine günstige Weiterbildung der Erfindung ist dadurch gekennzeichnet, dass die Dehnschraube oder der Dehnbolzen von innen, d.h. aus Achsrichtung der Radscheibe, eingeschraubt wird. Dies ermöglicht einen besonders vorteilhaften Schutz der Schraubenverbindung vor dem Betriebswasser.

Eine vorteilhafte Ausgestaltung der Erfindung ist dadurch gekennzeichnet, dass zwei oder mehr Becher zu jeweils einer Bechereinheit zusammengefasst und mittels einer gemeinsamen Dehnschraube an der Radscheibe befestigt sind. Damit lässt sich die Anzahl der zu montierenden Teile und damit auch die Montagezeit stark reduzieren.

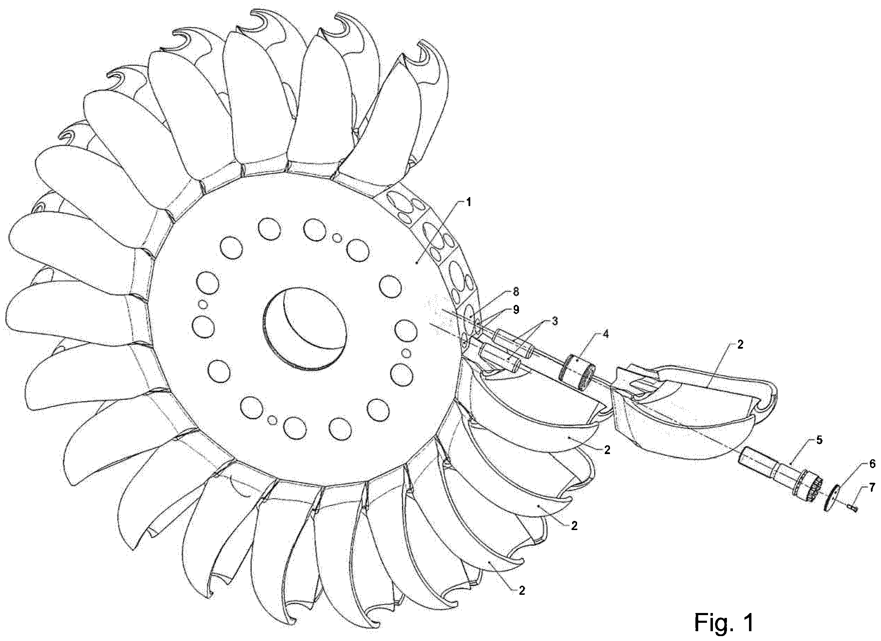

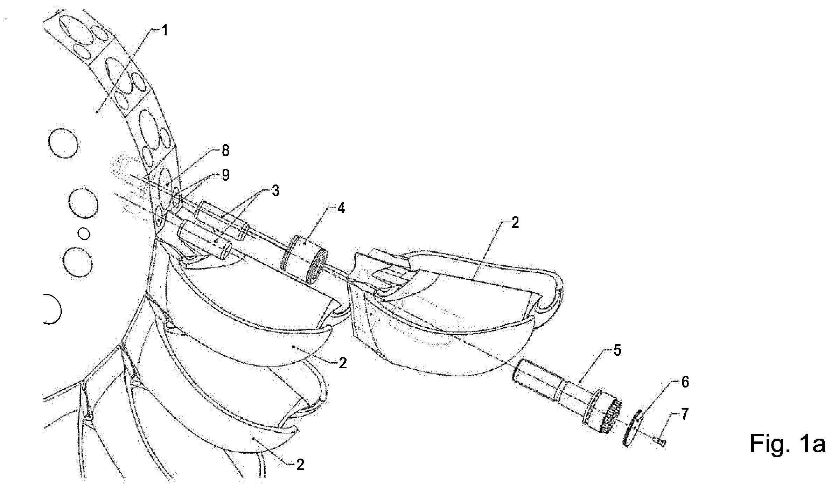

Die Erfindung wird nun anhand der Zeichnungen beispielhaft beschrieben, wobei
Fig. 1 eine 3D Darstellung einer Radscheibe mit montierten Bechern sowie der Explosionsansicht eines Bechers mit erfindungsgemäßer Befestigung,
Fig. 1 a einen vergrößerten Ausschnitt aus Fig. 1,
Fig. 2 eine Ansicht einer Radscheibe in axialer Richtung mit montierten Bechern sowie Schnitten im Bereich der Befestigung,

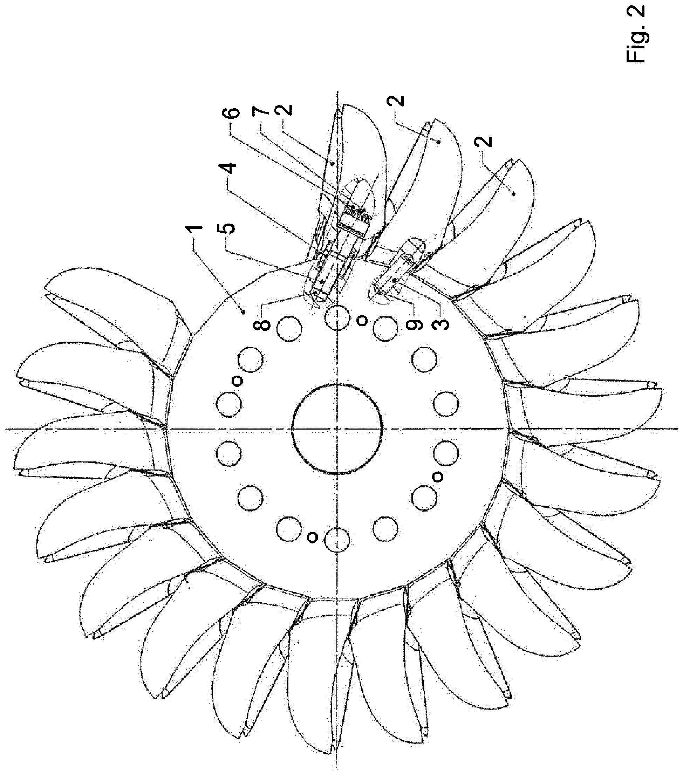

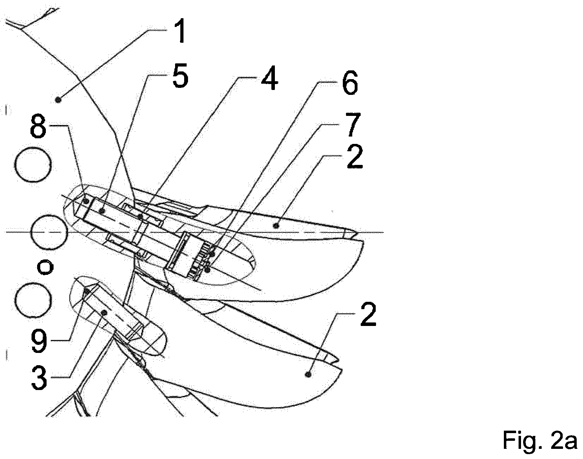

Fig. 2 a einen vergrößerten Ausschnitt aus Fig. 2,

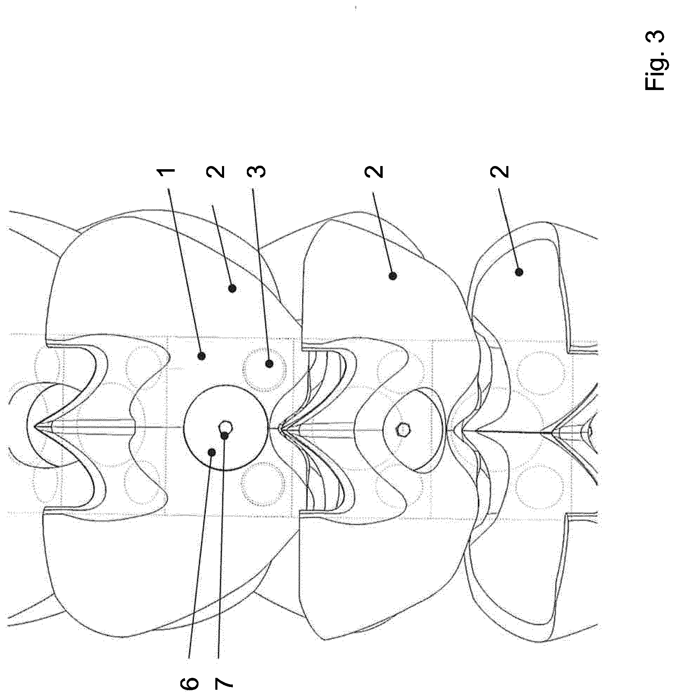

Fig. 3 eine Ansicht eines Ausschnittes einer Radscheibe mit montierten Bechern in radialer Richtung

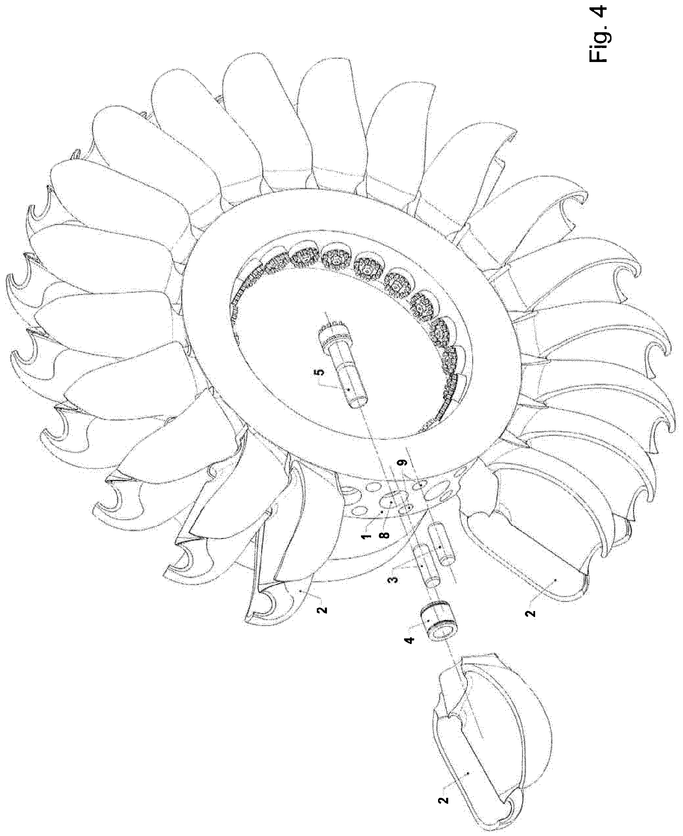

Fig. 4 eine Ansicht einer der Verschraubungsvariante von der Innenseite der Radscheibe

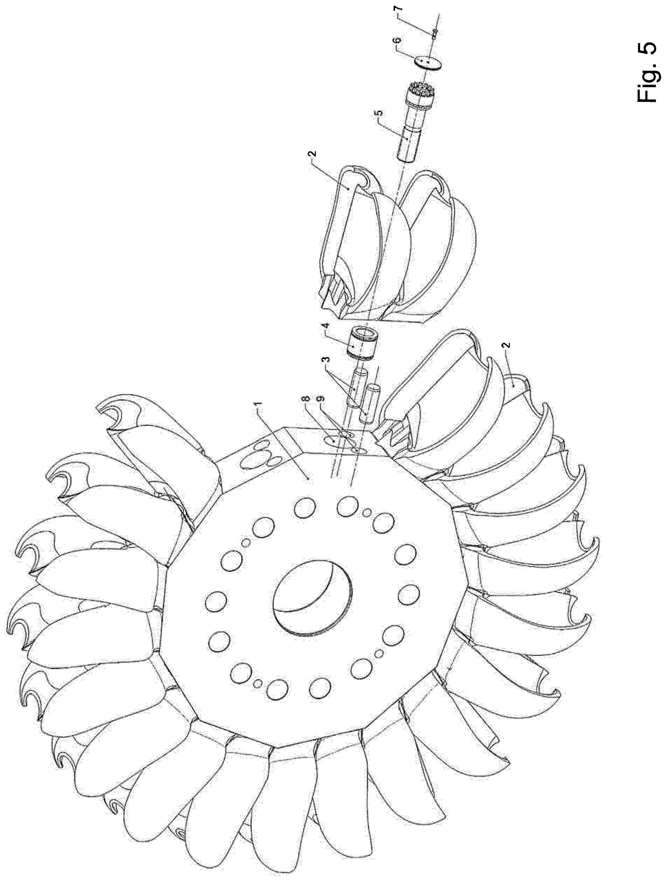

Fig. 5 eine Ansicht von zusammengefassten Bechereinheiten
   darstellt.

Fig. 1 zeigt eine 3D Darstellung einer Radscheibe 1 eines Peltonrades mit montierten Bechern 2 sowie der Explosionsansicht eines Bechers 2 mit erfindungsgemäßer Befestigung. Die Schraube 5 wird durch eine entsprechende Bohrung des Bechers 2 geführt, von einer Buchse 4 umgeben und in einer Bohrung 8 der Radscheibe 1 unter Vorspannung verschraubt. Daneben werden Scherbolzen 3 in entsprechende Löcher 9 der Radscheibe 1 und entsprechende Bohrungen im Becher 2 eingesetzt. Wie bei allen Pelton-Turbinen wird das Wasser durch Düsen auf die Becher 2 eingespritzt. Dieser Wasserstrahl wird auf den Bechern 2 in zwei Teile aufgeteilt. Beide Teile des Wasserstahls folgen dem Verlauf der inneren Oberfläche der Becher 2 bis das Wasser den Becher wieder verlässt. Durch die Richtungsänderung des Wasserstrahls wird eine Impulskraft auf den Becher 2 bzw. das Laufrad ausgeübt.

Diese Kraft wird nun durch die Scherbolzen 3 und Buchsen 4 auf die Radscheibe 1 übertragen. Die vorgespannten Schrauben 5 tragen im Wesentlichen die durch die Rotation entstehenden Zentrifugalkräfte der Pelton-Becher 2. Durch eine Schraube 7 wird eine Abdeckung 6 mit der Schraube 5 verbunden, um letztere vor abrasivem Wasser zu schützen.

Fig. 1 a stellt einen vergrößerten Ausschnitt aus Fig. 1 dar, in dem ein Teil der Radscheibe 1, zwei Becher 2 sowie ein weiterer Becher 2 mit den Befestigungsmitteln Schraube 5, Buchse 4, Scherbolzen 3 sowie Abdeckung 6 mit Schraube 7 erkennbar sind.

Fig. 2 zeigt eine Ansicht einer Radscheibe 1 in axialer Richtung mit montierten Bechern 2 sowie Schnitten im Bereich der Befestigung. Man erkennt hier wiederum die Radscheibe 1, eine Anzahl Becher 2 und am Beispiel von zwei Bechern in unterschiedlicher Schnittebene die Schraube 5 in der Bohrung 8 mit Buchse 4 sowie Abdeckung 6 mit Schraube 7. Bei einem weiteren Becher 2 ist die Schnittebene durch den Scherbolzen 3 und Bohrung 9 gelegt.

Die Einzelheiten sind in Fig. 2 a als vergrößertem Ausschnitt aus Fig. 2 besser erkennbar. Hier kann man auch erkennen, dass die Buchse 4 zwischen Schraube 5 und Radscheibe 1 sowie Becher 2 angeordnet ist und somit die an der Kontaktfläche von Radscheibe 1 und Becher 2 auftretenden Scherkräfte aufnimmt. Analog nehmen die Scherbolzen 3 Scherkräfte zwischen Radscheibe 1 und Becher 2 auf.

Fig. 3 stellt eine Ansicht der Becher 2 in radialer Richtung dar. Beim oberen vollständigen Becher 2 erkennt man die beiden Scherbolzen 3 sowie die Abdeckung 6 und Befestigungsschraube 7 über der Schraube 5 (hier nicht sichtbar). Diese Anordnung befindet sich auf der unteren Seite der Becher 2.

Durch diese Art der Befestigung wird es auch ermöglicht, dass einzelne Becher, die durch Abrasion verschlissen sind, ausgetauscht werden können, ohne die übrigen Becher zu demontieren. Es wird auch ermöglicht in einfacher Weise die Becher auszutauschen und Becher mit unterschiedlichen Geometrien entsprechend geänderten hydraulischen Anforderungen einzusetzen. Durch den Entfall der bisher konstruktiv benötigten Fortsätze der Becher, die an diesen Stellen besonders hohen Kräften und Abrasion ausgesetzt sind, können robustere Becher eingesetzt werden. Auch die Reparaturnotwendigkeit in den Bereichen hoher Kräfte entfällt.

Fig. 4 zeigt die genannte Konstruktion mit einer von der Innenseite der Radscheibe 1 her angebrachten Verschraubung. Der Vorteil dieser Variante ist, dass die becherseitigen Abdeckungen entfallen und die Verschraubung sehr einfach gegen abrasive Partikel und Wasser geschützt bzw. abgedichtet werden kann.

Fig. 5 zeigt eine Ansicht von zusammengefassten Bechereinheiten. Hier sind jeweils zwei Becher zu einer Bechereinheit zusammengefasst. Diese Bechereinheiten werden jeweils mit nur einer Schraube 5 an der Radscheibe 1 befestigt. Diese Art der Anordnung stellt eine Alternative zur bisher erläuterten Konstruktion dar. Diese Alternative verbindet die oben beschriebenen Vorteile mit einer reduzierten Montagezeit bezüglich Becherwechsel oder Umbau auf eine geänderte hydraulische Becherkontur.

## Patentansprüche

1. Peltonrad mit einer Radscheibe und mit separat gefertigten Bechern (2), die gegossen oder aus dem Vollen gefertigt und lösbar an der Radscheibe (1) befestigt sind, wobei die Befestigung mittels zumindest einer Schraube (5) oder mindestens einem Bolzen erfolgt, die bzw. der senkrecht zur Drehachse der Radscheibe (1) angeordnet und an der Radscheibe (1) befestigt ist, **dadurch gekennzeichnet, dass** die mindestens eine Schraube oder der mindestens eine Bolzen als Dehnschraube (5) oder Dehnbolzen ausgeführt ist, wobei die Dehnschraube (5) oder der Dehnbolzen kontrolliert vorgespannt ist und jeder Becher (2) mindestens eine Dehnschraube (5) oder Dehnbolzen, aufweist, wobei jeder Becher (2) über mindestens eine radial zur Drehachse der Radscheibe (1) ausgerichtete Scherbüchse (4) mit der Radscheibe (1) formschlüssig verbunden ist.

2. Peltonrad nach Anspruch 1, **dadurch gekennzeichnet, dass** die Dehnschraube (5) bzw. der Dehnbolzen in Verbindung mit einer Mutter vorgespannt ist.

3. Peltonrad nach Anspruch 1 oder 2, **dadurch gekennzeichnet, dass** jeder Becher (2) über weitere radial zur Drehachse ausgerichtete Scherbolzen (3) mit der Radscheibe (1) formschlüssig verbunden ist.

4. Peltonrad nach Anspruch 3, **dadurch gekennzeichnet, dass** die Dehnschraube (5) oder Dehnbolzen die radialen Fliehkräfte und die Scherbolzen (3) die tangentialen Strahlkräfte in die Radscheibe (1) einleiten.

5. Peltonrad nach einem der Ansprüche 1 bis 4, **dadurch gekennzeichnet, dass** die Schraube (5) an ihrem freien Ende eine Abdeckung (6) aufweist.

6. Peltonrad nach einem der Ansprüche 1 bis 4, **dadurch gekennzeichnet, dass** die Schraube (5) von innen, d.h. aus Achsrichtung der Radscheibe (1), eingeschraubt wird.

7. Peltonrad nach einem der Ansprüche 1 bis 6, **dadurch gekennzeichnet, dass** zwei oder mehr Becher (2) zu jeweils einer Bechereinheit zusammengefasst und mittels einer gemeinsamen Dehnschraube (5) an der Radscheibe (1) befestigt sind.

## Claims

1. Pelton runner with a wheel disk and separately manufactured buckets (2), which may be cast or made from a solid block of material and secured detachably to the wheel disk (1), fastened by at least one screw (5) or at least one bolt, which is arranged perpendicular to the axis of rotation of the wheel disk (1) and is secured to the wheel disk (1), **characterized in that** the at least one screw or at least one bolt is designed as an expansion screw (5) or expansion bolt, where the expansion screw (5) or expansion bolt is subjected to controlled pre-stressing, and each bucket (2) has at least one expansion screw (5) or expansion bolt, where each bucket (2) is joined in a form-locked connection to the wheel disk (1) via at least one shear bushing (4) aligned in radial direction to the axis of rotation of the wheel disk (1).

2. Pelton runner according to Claim 1, **characterized in that** the expansion screw (5) or the expansion bolt is pre-stressed in combination with a nut.

3. Pelton runner according to Claim 1 or 2, **characterised in that** each bucket (2) is joined in a form-locked connection to the wheel disk (1) via other shear pins (3) aligned in radial direction to the axis of rotation.

4. Pelton runner according to Claim 3, **characterized in that** the expansion screw (5) or expansion bolt directs the radial centrifugal forces and the shear pins (3) direct the tangential jet forces into the wheel disk (1).

5. Pelton runner according to one of Claims 1 to 4, **characterized in that** the expansion screw (5) has a cover (6) at its free end.

6. Pelton runner according to one of Claims 1 to 4, **characterized in that** the expansion screw (5) is screwed in from the inside, i.e. from the axial direction of the wheel disk (1).

7. Pelton runner according to one of Claims 1 to 6, **characterised in that** two or more buckets (2) are each combined to form one bucket unit and secured to the wheel disk (1) by a common expansion screw (5).

## Revendications

1. Roue Pelton dotée d'un disque et d'ailettes (2) fabriquées séparément, qui sont moulées ou fabriquées dans la masse et fixées amovibles au disque (1), la fixation s'effectuant au moyen d'au moins une vis (5) ou au moins un boulon, qui est disposé(e) perpendiculairement à l'axe de rotation du disque (1) et est fixé(e) au disque (1), **caractérisée en ce que** ladite vis ou ledit boulon est conçu(e) sous la forme d'une vis d'expansion (5) ou un boulon d'expansion, la vis d'expansion (5) ou le boulon d'expansion étant précontraint(e) de manière contrôlée et chaque ailette (2) présentant au moins une vis d'expansion (5) ou un boulon d'expansion, chaque ailette (2) étant reliée, par l'intermédiaire d'au moins une douille de cisaillement (4) orientée radialement à l'axe de rotation du disque (1), par complémentarité de forme au disque (1).

2. Roue Pelton selon la revendication 1, **caractérisée en ce que** la vis d'expansion (5) ou le boulon d'expansion est précontraint(e) en relation avec un écrou.

3. Roue Pelton selon la revendication 1 ou 2, **caractérisée en ce que** chaque ailette (2) est reliée par complémentarité de forme au disque (1) par l'intermédiaire d'autres boulons de cisaillement (3) orientés radialement à l'axe de rotation.

4. Roue Pelton selon la revendication 3, **caractérisée en ce que** la vis d'expansion (5) ou le boulon d'expansion dirigent les forces centrifuges radiales et les boulons de cisaillement (3) dirigent les forces de jet tangentielles dans le disque.

5. Roue Pelton selon l'une quelconque des revendications 1 à 4, **caractérisée en ce que** la vis (5) est dotée d'un couvercle (6) sur son extrémité libre.

6. Roue Pelton selon l'une quelconque des revendications 1 à 4, **caractérisée en ce que** la vis (5) est vissée depuis l'intérieur, c'est-à-dire depuis la direction axiale du disque (1).

7. Roue de Pelton selon l'une quelconque des revendications 1 à 6, **caractérisée en ce qu'**au moins deux ailettes (2) sont regroupées respectivement en une unité d'ailettes et sont fixées au moyen d'une vis d'expansion (5) commune au disque (1).
